# EUROPEAN PATENT APPLICATION

(11) **EP 4 737 803 A1**
(43) Date of publication of application: **06.05.2026**
(21) Application number: 25210766.9
(22) Date of filing: 23.10.2025
(51) Int. Cl.: F24C 7/08, F24C 15/32

(54) **COOKING APPLIANCE AND CONTROL METHOD THEREOF**

(30) Priority: 05.11.2024 KR 20240155168
(71) Applicant: LG Electronics Inc., Yeongdeungpo-gu Seoul 07336 (KR)
(72) Inventor: YANG, Hak Soon, 07796 Seoul (KR); PARK, Kyoung-Joon, 07796 Seoul (KR); YANG, Jaekyung, 07796 Seoul (KR); KWAG, Dongseong, 07796 Seoul (KR); LEE, Suyong, 07796 Seoul (KR)
(74) Representative: Schornack, Oliver

(57) **Abstract**

An invention relating to a cooking appliance and a control method thereof is disclosed. The disclosed invention includes a fan motor capable of rotating a fan at three or more speeds, wherein, in a normal operation mode, the fan motor rotates the fan at a first speed or at a second speed lower than the first speed, and, in a Sabbath mode, the fan motor rotates the fan at a third speed lower than the first speed and the second speed.

## Description

The present invention relates to a cooking appliance, and more particularly, to a cooking appliance providing a Sabbath mode and a control method thereof.

A cooking appliance is a home appliance installed in a kitchen space to cook food according to a user's intention. Such cooking appliances can be classified in various ways depending on the heat source, the type or form of the appliance, and the kind of fuel used.

When classified according to how food is cooked, cooking appliances may be divided into open-type and closed-type appliances depending on the form of the space on which food is placed. Closed-type appliances include ovens and microwave ovens, and open-type appliances include a cooktop, a hob, and a griddle.

A closed-type cooking appliance shields a space in which food is located and cooks the food by heating the shielded space. The closed-type cooking appliance is provided with a cooking chamber that is the space to be shielded when cooking is to be performed while food is placed therein. The cooking chamber thus becomes the space in which the food is actually cooked.

In a closed-type cooking appliance, a door is provided rotatably to selectively open and close the cooking chamber. The door is rotatably installed at a main body by a door hinge provided between the main body in which the cooking chamber is formed and the door. The door opens and closes the cooking chamber by rotating about a portion coupled to the main body via the door hinge.

A heat source is provided in the internal space of the cooking chamber opened and closed by the door to heat the cooking chamber. As the heat source, a gas burner or an electric heater may be used.

Meanwhile, a convection device may further be provided at a rear side of the cooking chamber. The convection device circulates air inside the cooking chamber so that heat is evenly delivered throughout the cooking chamber. The convection device may include a fan cover installed at a rear wall of the cooking chamber and a convection fan installed in an internal space of the fan cover.

The fan cover may be provided with an intake port and a discharge port. The intake port may be formed at a central portion of a front surface of the fan cover facing the door, and the discharge port may be formed at a side surface of the fan cover facing a side surface of the cooking chamber.

The convection fan may rotate inside the fan cover to generate an airflow. By operation of the convection fan, an air-circulation flow may be generated in which air in the cooking chamber is drawn into the inside of the fan cover through the intake port and heated air inside the fan cover is discharged into the cooking chamber through an exhaust/discharge port.

An object of the present invention is to provide a cooking appliance and a control method thereof capable of improving the uniformity of cooking quality.

Another object of the present invention is to provide a cooking appliance and a control method thereof capable of offering an automatic cooking function that enhances the uniformity of cooking quality.

A further object of the present invention is to provide a cooking appliance and a control method thereof capable of concentrating heating energy onto a target portion among various portions of a cooking subject.

Preferably, a control method of a cooking appliance according to an embodiment of the present invention for achieving the above object is characterized in that, based on an image obtained as a result of an imaging step of the cooking chamber, the cooking chamber is divided into a plurality of separate areas, the state of a cooking subject in each of the separate areas is determined, and the operation of the heating device is controlled so that hot air is supplied to an area selected based on the determination results.

Another embodiment of the present invention is characterized in that the operation of the heating device is controlled so that hot air is supplied toward a selected area, which is one of the separate areas determined based on the state of the cooking subject, wherein the operation of the heating device is controlled such that at least one of a discharge position and a reach distance of a main stream of hot air discharged from the heating device is adjusted.

According to one aspect of the present invention, a control method of a cooking appliance may include: an imaging step of imaging the cooking chamber with the camera; a state determination step of dividing the cooking chamber into a plurality of separate areas based on the image acquired by the camera and determining the state of the cooking subject in each of the separate areas; an area selection step of selecting, among the plurality of separate areas, a target area to which hot air is to be supplied, based on the state of the cooking subject determined in the state determination step; and a heating operation adjustment step of controlling the operation of the heating device so that hot air is supplied toward the selected area.

Preferably, in the heating operation adjustment step, the operation of the heating device is controlled such that at least one of a discharge position and a reach distance of a main stream of hot air discharged from the heating device is adjusted.

Preferably, in the heating operation adjustment step, a position of the selected area in a front-rear direction is determined, and the operation of the heating device is controlled such that the reach distance of the main stream of hot air discharged from the heating device is adjusted.

Preferably, the heating device may include a fan rotatable to supply hot air into the cooking chamber.

Preferably, in the heating operation adjustment step, the rotational speed of the fan is adjusted.

Preferably, in the heating operation adjustment step, the closer the position of the selected area is to the front, the higher the rotational speed of the fan is increased.

Preferably, in the heating operation adjustment step, a position of the selected area on a coordinate plane orthogonal to the front-rear axis is determined, and the operation of the heating device is controlled such that the discharge position of the main stream of hot air discharged from the heating device is adjusted.

Preferably, in the heating operation adjustment step, both a position of the selected area in the front-rear direction and a position of the selected area on a coordinate plane orthogonal to the front-rear axis are determined, and the operation of the heating device is controlled such that both the reach distance and the discharge position of the main stream of hot air discharged from the heating device are adjusted.

Preferably, the heating device may include a fan configured to rotate in both a forward direction and a reverse direction about a front-rear axis.

Preferably, the discharge position of the main stream of hot air discharged from the heating device varies according to the rotation direction of the fan.

Preferably, in the heating operation adjustment step, the rotation direction of the fan is adjusted according to the position of the selected area on the coordinate plane.

Preferably, in the heating operation adjustment step, the heating amount of the heating device is adjusted according to the position of the selected area on the coordinate plane.

Another aspect of the present invention provides a cooking appliance comprising: a main body having a cooking chamber formed therein; a camera for imaging the cooking chamber; a controller configured to divide the cooking chamber into a plurality of separate areas based on an image acquired by the camera and to select, as a selected area, one of the separate areas to which hot air is to be supplied; and a heating device operable to supply hot air toward the selected area.

Preferably, the controller controls the operation of the heating device such that at least one of a discharge position and a reach distance of a main stream of hot air discharged from the heating device is adjusted.

Preferably, the heating device may include a fan cover having a first front discharge port and a second front discharge port, and a fan rotatable about a front-rear axis.

Preferably, on a coordinate plane orthogonal to a rotation axis of the fan and having an origin located on the rotation axis of the fan, the first front discharge port and the second front discharge port are disposed at different positions.

Preferably, the fan rotates in a forward direction to discharge a main stream of hot air from inside the heating device into the cooking chamber through the first front discharge port, or rotates in a reverse direction to discharge a main stream of hot air from inside the heating device into the cooking chamber through the second front discharge port.

Preferably, the controller adjusts the rotation direction of the fan according to the position of the selected area on the coordinate plane.

Preferably, the first front discharge port and the second front discharge port are disposed at a front surface of the fan cover.

Preferably, among quadrants of the coordinate plane divided by a front-rear axis and a vertical axis intersecting at the origin, the first front discharge port is disposed in at least one of a second quadrant and a fourth quadrant, and the second front discharge port is disposed in at least one of a first quadrant and a third quadrant.

According to the cooking appliance and its control method of the present invention, heating can be performed on the cooking subject by concentrating heat on areas requiring a higher level of heating compared to other parts, thereby improving the uniformity of cooking quality.

Furthermore, the present invention provides an automatic cooking function that can enhance cooking quality while ensuring uniformity. This is achieved by automatically detecting the state of the cooking subject in each designated area and using this detection result to concentrate heat on the target area requiring focused heating.

Furthermore, the present invention enables more intensive heating of specific desired areas within the food item. This allows for the provision of a wider variety of cooking results according to the user's intent, thereby more effectively enhancing user satisfaction.

### BRIEF DESCRIPTION OF DRAWINGS

FIG. 1 is a perspective view showing a cooking appliance according to an embodiment of the present invention.
FIG. 2 is a front view showing a state in which a door of the cooking appliance shown in FIG. 1 is opened.
FIG. 3 is a side sectional view showing an internal structure of the cooking appliance shown in FIG. 1.
FIG. 4 is an enlarged view obtained by enlarging a part of the cooking appliance shown in FIG. 3.
FIG. 5 is a configuration diagram schematically showing a configuration of a cooking appliance according to an embodiment of the present invention.
FIG. 6 and FIG. 7 are flowcharts showing a control process of a cooking appliance according to an embodiment of the present invention.

### DETAILED DESCRIPTION

The above-described aspects, features and advantages are specifically described hereafter with reference to accompanying drawings such that one having ordinary skill in the art to which the disclosure pertains can embody the technical spirit of the disclosure easily. In the disclosure, detailed description of known technologies in relation to the subject matter of the disclosure is omitted if it is deemed to make the gist of the disclosure unnecessarily vague Hereafter, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

Embodiments are not limited to the embodiments set forth herein, and can be modified and changed in various different forms. The embodiments in the disclosure are provided such that the disclosure can be through and complete and fully convey its scope to one having ordinary skill in the art. Accordingly, all modifications, equivalents or replacements as well as a replacement of the configuration of any one embodiment with the configuration of another embodiment or an addition of the configuration of any one embodiment to the configuration of another embodiment, within the technical spirit and scope of the disclosure, are to be included in the scope of the disclosure.

The accompanying drawings are provided for a better understanding of the embodiments set forth herein and are not intended to limit the technical spirit of the disclosure. It is to be understood that all the modifications, equivalents or replacements within the spirit and technical scope of the disclosure are included in the scope of the disclosure. The sizes or thicknesses of the components in the drawings are exaggerated or reduced to ensure ease of understanding and the like. However, the protection scope of the subject matter of the disclosure is not to be interpreted in a limited way.

The terms in the disclosure are used only to describe specific embodiments or examples and not intended to limit the subject matter of the disclosure. In the disclosure, singular forms include plural forms as well, unless explicitly indicated otherwise. In the disclosure, the terms "comprise", "comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as "connected" or "coupled" to another component, any one component can be directly connected or coupled to another component, but an additional component can be "interposed" between the two components or the two components can be "connected" or "coupled" by an additional component. When any one component is described as "directly connected" or "directly coupled" to another component, an additional component cannot be "interposed" between the two components or the two components cannot be "connected" or "coupled" by an additional component.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on the floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction is referred to as one direction of the first direction, and the rearward direction is referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one direction of the second direction, and the left side can be referred to as the other direction of the second direction.

Further, the widthwise direction of the cooking appliance can also be referred to as a lateral direction. Then the right side can also be referred to as one side of the lateral direction, and the left side can be referred to the other side of the lateral direction.

Additionally, an up-down direction can be referred to as a third direction. Then an upward direction can be referred to as one direction of the third direction, and a downward direction can be referred to as the other direction of the third direction.

Furthermore, the up-down direction can be referred to as a vertical direction. Then the front-rear direction and the left-right direction, i.e., the first direction and the second direction, can be referred to as the horizontal direction.

Throughout the disclosure, the terms "A and/or B" as used herein can denote A, B or A and B, and the terms "C to D" can denote C or greater and D or less, unless stated to the contrary.

### [Overall Structure of the Cooking Appliance]

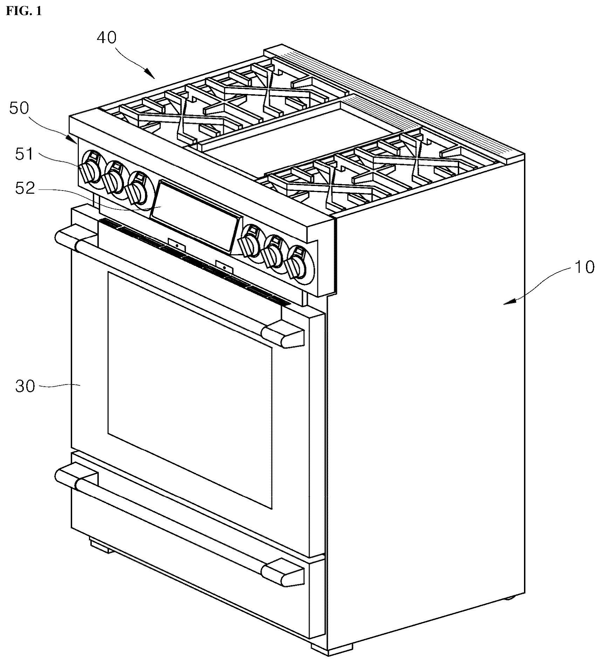

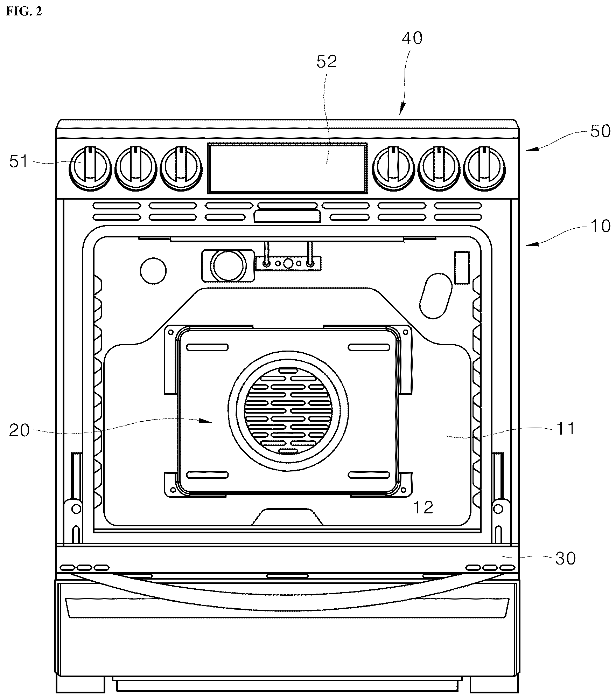

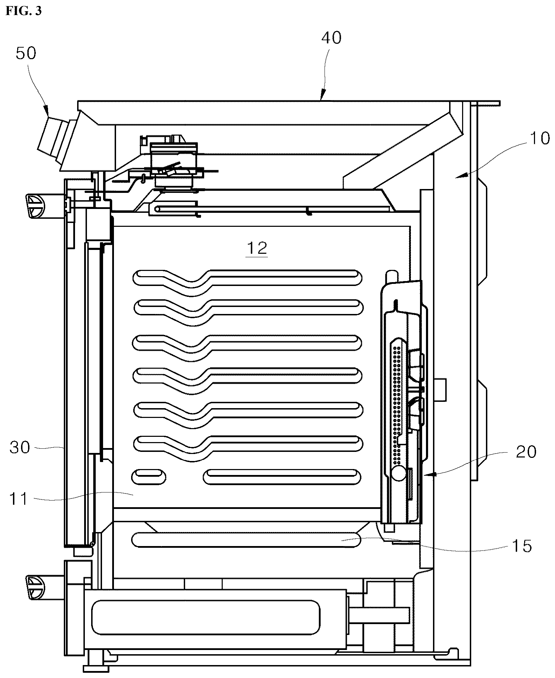

FIG. 1 is a perspective view showing a cooking appliance according to an embodiment of the present invention, FIG. 2 is a front view showing a state in which a door of the cooking appliance shown in FIG. 1 is opened, and FIG. 3 is a side sectional view showing an internal structure of the cooking appliance shown in FIG. 1.

Referring to FIGS. 1 to 3, a cooking appliance may have an exterior formed by a main body 10. The main body 10 may be provided in a form including a substantially hexahedral shape, and may be formed of a material having a predetermined strength to protect a plurality of parts installed in an internal space.

The main body 10 includes a cavity 11 forming a framework of the main body 10. The cavity 11 may be formed in a form of a hexahedron whose front is open, and a cooking chamber 12 is provided inside the cavity 11.

The cavity 11 may be formed in a form of a hexahedron with an open front, and the cooking chamber 12 may be formed inside such a cavity 11. That is, the cooking chamber 12 may be formed as a substantially hexahedral space disposed inside the cavity 11, and may be formed as a space that is open toward the front.

In a state in which such a cooking chamber 12 is shielded, cooking may be performed while the inside of the cooking chamber 12 is heated. That is, in a cooking appliance of the present embodiment provided as a closed-type cooking appliance, the cooking chamber 12 is substantially a space in which food is cooked.

A heating device is provided in the cooking appliance to heat the cooking chamber 12. The heating device may be provided as a burner using a gas fuel, or may be provided as a heater using electricity. As such, the structure of the heating device may be changed according to a type of a heat source used. In the present embodiment, a case where the heating device is provided as a heater using electricity will be described as an example.

By way of example, the heating device may include a convection device 20 disposed behind the cooking chamber 12. The convection device 20 allows the inside space of the cooking chamber 12 to be uniformly heated by sucking air in the cooking chamber 12, heating it, and then discharging it back into the inside of the cooking chamber 12 while causing the air to flow.

Also, the heating device may include a bake heater 15. The bake heater 15 is disposed at a lower side of the cooking chamber 12 and can heat the inside space of the cooking chamber 12 at a lower side of the cooking chamber 12.

Also, the heating device may include a grill heater. The grill heater is disposed at an upper side of the cooking chamber 12 and can heat the inside space of the cooking chamber 12 at an upper side of the cooking chamber 12.

A cooking appliance may be provided with a door 30 that is rotatable to selectively open and close the cooking chamber 12. By way of example, the door 30 may be provided in a form of opening and closing the cooking chamber 12 by a pull-down type in which an upper end rotates up and down around a lower end.

At an upper portion of the main body 10, a cooktop unit 40 configured to cook food by heating food or a container containing food may be disposed. The cooktop unit 40 may be provided with a top plate forming an upper exterior and closing an upper end of the main body 10.

At a central portion of the cooktop unit 40, at least one heating part for heating food or a container containing food to be cooked may be provided. For example, the heating part may be provided as a heating device using a gas fuel. As another example, the heating part may be provided as an induction heater using electricity. As such, the structure of the heating part may be changed according to a type of a heat source used.

A control panel 50 may be provided at an upper front of the front of the cooking appliance, that is, at an upper front of the cavity 11. The control panel 50 may form a part of a front exterior of the cooking appliance. The control panel 50 may be provided with a knob 51 for controlling an operation of the cooking appliance and a display 52 that displays an operation state of the cooking appliance.

Also, the cooking appliance of the present embodiment may include a controller 90. The controller 90 may be provided to control an operation of the cooking appliance. For example, the controller 90 may control an operation of the heating part 20 according to an input signal input through the knob 51 or a switch provided on the control panel 50.

### [Convection Device]

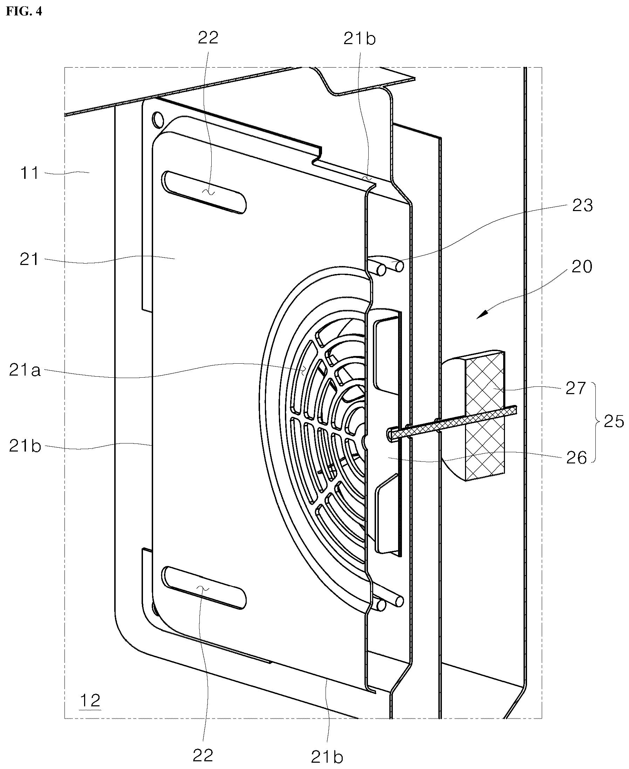

FIG. 4 is an enlarged view obtained by enlarging a part of the cooking appliance shown in FIG. 3.

As shown in FIGS. 3 to 4, a heating device is provided in the cooking appliance of the present embodiment, and the heating device may include the convection device 20. By way of example, the convection device 20 may include a fan cover 21, a convection heater 23, and a fan module 25.

The fan cover 21 is disposed at a rear portion of the cooking chamber 12 and may be installed at a rear surface of the cavity 11. The fan cover 21 can form, inside the cooking chamber 12, a receiving space that is a space separated from the cooking chamber 12. The receiving space is a space formed inside the fan cover 21 to receive the fan module 25, and the fan module 25 received in the receiving space may be disposed in a space separated from the cooking chamber 12.

By way of example, the fan cover 21 may be formed in a hexahedral shape such that a front faces the door 30 and a side faces a side of the cavity 11. A suction port 21a is disposed at a front center of the fan cover 21, and air in the cooking chamber 12 can be introduced into an inner space of the convection device 20 through the suction port 21a.

The inner space of the convection device 20 formed by the fan cover 21, that is, the receiving space, may be provided with the convection heater 23 and the fan module 25. The convection heater 23 is provided to be able to heat air introduced into the inner space of the convection device 20. The convection heater 23 may be provided as a burner using a gas fuel or may be provided as a heater using electricity.

Hot air heated by the convection heater 23 in the inner space of the convection device 20 may be discharged into the cooking chamber 12 by the fan module 25. That is, hot air is generated in the inner space of the convection device 20 by the convection heater 23 and the fan module 25, and such hot air may be discharged into the cooking chamber 12 through a discharge port 21b.

As shown in FIGS. 3 to 5, the discharge port 21b may be provided in the fan cover 21. The discharge port 21b may be disposed at at least any one of a side surface, an upper surface, and a lower surface of the fan cover 21. In the present embodiment, it is illustrated that the discharge port 21b is respectively disposed at both side surfaces, the upper surface, and the lower surface of the fan cover 21.

Each discharge port 21b may be formed in a form of penetrating a side surface, an upper surface, or a lower surface of the fan cover 21. Hot air generated inside the convection device 20 may be discharged into the cooking chamber 12 through the discharge port 21b.

Also, the fan cover 21 may further include a front discharge port 22. The front discharge port 22 may be disposed at a front surface of the fan cover 21. The front discharge port 22 can form, at the front of the fan cover 21, a passage in a front-rear direction that connects the cooking chamber 12 and the receiving space.

By way of example, the suction port 21a is disposed at a front center of the fan cover 21, and a plurality of front discharge ports 22 may be disposed so as to surround it. Each front discharge port 22 may be formed in a form of penetrating the front surface of the fan cover 21 in the front-rear direction.

The fan module 25 is disposed in the inner space of the convection device 20 surrounded by the fan cover 21 and is provided to be able to rotate about a front-rear direction axis. A rotation axis of the fan module 25 may be disposed at a position that overlaps in the front-rear direction with the suction port 21a disposed at substantially a center of the fan cover 21.

The fan module 25 may suck air of the cooking chamber 12 into the inner space of the convection device 20 through the suction port 21a and may discharge air heated in the inner space of the convection device 20 into the cooking chamber 12 through the discharge port 21b and the front discharge port 22.

For example, the fan module 25 may generate a flow of hot air that moves rearward from the cooking chamber 12 toward the inner space of the convection device 20 and moves in a centrifugal direction in the inner space of the convection device 20. The fan module 25 may include a fan 26 and a fan motor 27.

The fan 26 is provided to be able to generate hot air by rotating about a front-rear direction axis. The fan 26 may be coupled to a rotation shaft rotated by the fan motor 27, and may rotate about the rotation shaft.

The fan motor 27 is provided to be able to rotate the fan 26. The fan motor 27 may be provided to be operable at several types of outputs. An output of the fan motor 27 may affect a rotation speed of the fan 26 and a noise level of the fan module 27. For example, as an output of the fan motor 27 increases, a rotation speed of the fan 26 and noise of the fan module 27 increase, and as the output of the fan motor 27 decreases, the rotation speed of the fan 26 and the noise of the fan module 27 may decrease.

By way of example, the fan motor 27 may be provided to be operable at three types of outputs. That is, the output of the fan motor 27 may be changed to three types as needed.

By way of example, the fan motor 27 may include a brushless direct current motor (hereinafter, referred to as "BLDC motor"). That is, a BLDC motor configured to rotate the fan 26 at three or more speeds may be applied as the fan motor 27 of the present embodiment.

An operation of the BLDC motor may be controlled by an Electronic Speed Controller (hereinafter, referred to as "ESC"). The ESC controls a speed of the BLDC, and by operation control performed by the ESC, a rotation direction and a rotation speed of the BLDC motor can be precisely controlled, and a speed of the BLDC motor can be changed to three or more speeds.

For example, the fan motor 27 may operate at a first output, may operate at a second output lower than the first output, and may operate at a third output lower than the second output. Also, during operation of the fan motor 27, the output of the fan motor 27 may be changed from the first output to the second output or the third output, or may be changed from the second output to the first output or the third output.

During the second-output operation, the fan motor 27 may rotate the fan 26 at a speed slower than during the first-output operation. Also, during the third-output operation, the fan motor 27 rotates the fan 26 at a speed slower than during the second-output operation.

By way of example, the second output may be an output at least 15% lower than the first output, and the third output may be an output at least 50% lower than the first output. For example, a fan motor 27 operating at the second output may rotate the fan 26 at a speed at least 20% slower than during the first-output operation, and a fan motor 27 operating at the third output may rotate the fan 26 at a speed at least 50% slower than during the first-output operation.

### [Sabbath Mode]

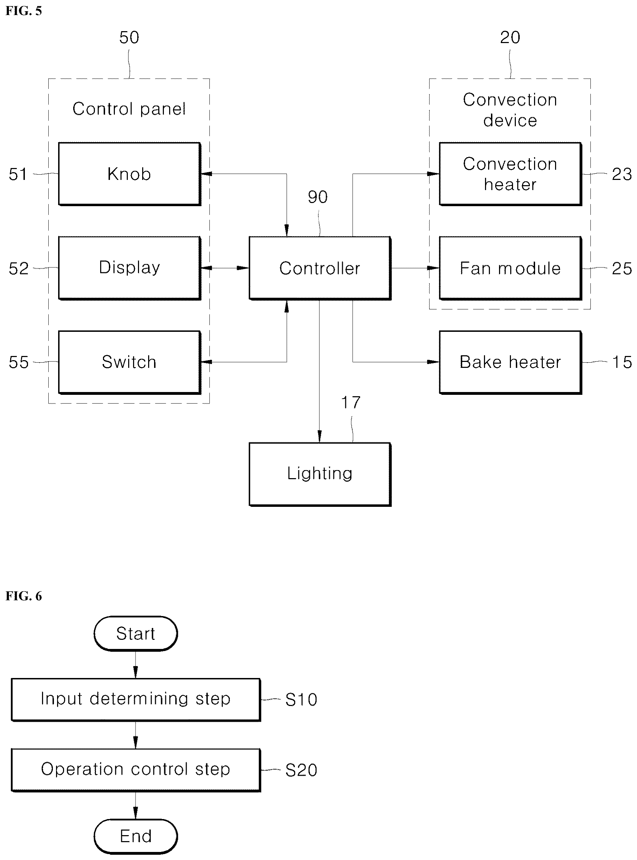

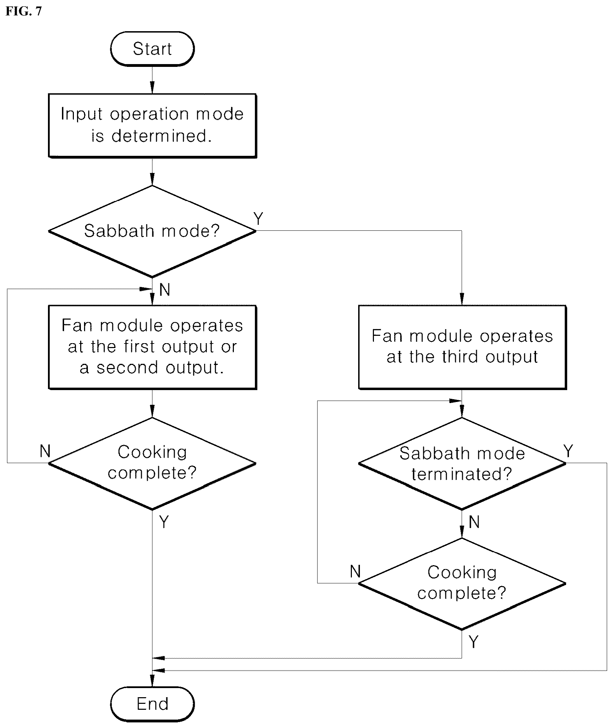

FIG. 5 is a configuration diagram schematically showing a configuration of a cooking appliance according to an embodiment of the present invention, and FIG. 6 and FIG. 7 are flowcharts showing a control process of a cooking appliance according to an embodiment of the present invention.

Referring to FIGS. 5 to 7, a cooking appliance according to an embodiment of the present invention may provide an automatic cooking function. In such a cooking appliance, a user may select an automatic cooking mode by operating a knob 51 or a switch 55 provided on the control panel 50. When the automatic cooking mode is selected, the controller 90 may control operations of the heating device, lighting, and other related devices to provide the automatic cooking function.

For example, the controller 90 of the cooking appliance may provide the automatic cooking function in a form of adjusting a target of operation, an output, and an operation timing of the heating device, while adjusting a timing of lighting on/off and a timing of display of a guide sound.

Also, a cooking appliance according to an embodiment of the present invention may be operated in a Sabbath mode. Some religious regulations do not allow a person to operate a device or to change a state of a device in operation during a Sabbath period. The Sabbath mode may be provided for the purpose of allowing a user to use a cooking function of the cooking appliance while avoiding violation of such regulations.

The Sabbath mode can reduce a need for a user to operate the cooking appliance during the Sabbath period by providing the automatic cooking function as described above. Also, the Sabbath mode may provide a function of making operations on the cooking appliance or operation changes of the cooking appliance less externally noticeable by limiting feedback related to results of operations on the cooking appliance and operation changes of the cooking appliance.

In order for the cooking appliance to be operated in the Sabbath mode as described above, the cooking appliance may check an input operation mode (input determining step; S10). Accordingly, the cooking appliance may check whether an operation mode input to the cooking appliance is the Sabbath mode.

By way of example, the Sabbath mode may be automatically input as an operation mode to the cooking appliance, and accordingly, the cooking appliance may be automatically operated in the Sabbath mode. Accordingly, the cooking appliance may automatically determine whether the Sabbath has been reached, and may automatically determine whether to perform the Sabbath operation according to a result of the determination.

For example, information related to a Sabbath period may be pre-input to the cooking appliance, and the controller 90 may automatically determine whether it is currently a Sabbath period by using this information. As a result, when it is determined that the Sabbath has started, the cooking appliance may be automatically operated in the Sabbath mode.

As another example, a user may manually operate the cooking appliance in the Sabbath mode. For example, the user may operate one related to initiation of a Sabbath operation mode among the knob 51 or the switch 55 provided on the control panel 50, and according to the operation, the cooking appliance may be operated in the Sabbath mode.

As yet another example, when the cooking appliance is provided in a double oven form, only one of operation modes of the two ovens may be switched to the Sabbath mode, or the operation modes of both ovens may be switched to the Sabbath mode.

When checking of the input operation mode is completed, the controller 90 may control an operation of the cooking appliance according to a type of the input operation mode (operation control step; S20).

When the operation mode input in the input determining step (S10) is the normal operation mode, an operation of the cooking appliance may be performed in an automatic cooking mode other than the Sabbath mode, and an operation of the cooking appliance may be performed manually by an additional operation being added later.

When the convection device 20 is operated in the normal operation mode, only an operation of the convection heater 23 may be performed, only an operation of the fan module 25 may be performed, or operations of the convection heater 23 and the fan module 25 may be performed together.

When an operation of the fan module 25 is performed in the normal operation mode, the fan module 25 may be operated at any one of a first output and a second output. That is, the fan module 25 operated in the normal operation mode may operate at the first output to rotate the fan 26 at a first speed, or may operate at the second output to rotate the fan 26 at a second speed.

By way of example, it may be set that the fan 26 rotating at the first speed means that the fan 26 rotates at a high speed, and it may be set that the fan 26 rotating at the second speed means that the fan 26 rotates at a medium speed that is a speed lower than the first speed. For example, the fan module 25 operated in the normal operation mode may rotate the fan 26 at a speed of about 1600 rpm by operating at the first output, and may rotate the fan 26 at a speed of about 1300 rpm by operating at the second output.

Meanwhile, when the operation mode input in the input determining step (S10) is the Sabbath mode, the cooking appliance may be operated in the Sabbath mode. For example, when the Sabbath mode is activated, it may be displayed on the display 52 that the Sabbath mode has been activated, while an operation of an input unit that generates a signal to at least manually operate any one of the heating device and lighting implemented in the cooking appliance may be disabled.

For example, when the Sabbath mode is activated, all input units for manually operating the cooking appliance, such as the knob 51 and the switch 55 of the control panel 50, may be disabled.

Also, when the Sabbath mode is activated, even if an opening/closing operation of the door occurs or an operation of the input unit occurs, an operation control for changing an operation of the cooking appliance may be disabled, a change of a heating temperature of the cooking appliance may not be allowed, and timer and alarm functions may be disabled. For example, even if a movement of the door occurs or an operation of the input unit occurs, an operation state of the cooking appliance does not change.

When the Sabbath mode is activated, and accordingly an operation of the convection device 20 is performed, only an operation of the convection heater 23 may be performed, only an operation of the fan module 25 may be performed, or operations of the convection heater 23 and the fan module 25 may be performed together.

When an operation of the fan module 25 is performed in the Sabbath mode, the fan module 25 may be operated at a third-lowest output among three or more speeds. For example, the fan module 25 operated in the Sabbath mode may operate at a third output to rotate the fan 26 at a third speed.

By way of example, it may be set that the fan 26 rotating at the third speed means that the fan 26 rotates at a low speed that is a speed lower than the second speed. For example, the fan module 25 operated in the Sabbath mode may rotate the fan 26 at a speed of about 700 rpm by operating at the third output.

By way of example, the heating device may include the bake heater 15. The bake heater 15 is disposed at a lower side of the cooking chamber 12 and is provided to be able to heat the inside space of the cooking chamber 12 at a lower side of the cooking chamber 12.

In the Sabbath mode, only an operation of the convection device 20 among the convection device 20 and the bake heater 15 may be performed, and an operation of the bake heater 15 may not be performed.

If the convection heater 23 and the bake heater 15 operate together to heat the cooking chamber 12, uniform heating of the entire cooking chamber 12 may be performed more effectively than in a case of heating the cooking chamber 12 only by the convection heater 23.

However, depending on a characteristic of cooking being performed in the cooking appliance, in a case where operation of the bake heater 15 is unnecessary or heating by the bake heater 15 is inappropriate, only an operation of the convection device 20 may be performed, and in such a state, if the fan 26 is not operated, it is not easy to uniformly heat the entire cooking chamber 12 only by the convection heater 23.

As another example, the heating device may not be provided with the bake heater 15. Even in this case, it becomes difficult to uniformly heat the entire cooking chamber 12 only by the convection heater 23 without operation of the fan 26.

In consideration of such a point, in the present embodiment, the heating device may be configured such that, when the cooking appliance is operated in the Sabbath mode, heating of the cooking chamber 12 is performed without operation of the bake heater 15. That is, in the Sabbath mode, at least any one of the convection heater 23 and the fan motor 27 operates, and the bake heater 15 does not operate.

At this time, only heating by the convection heater 23 may be performed, heating by the convection device 20 and heating by the grill heater may be performed together, or only heating by the grill heater may be performed.

Along with this, when the cooking appliance of the present embodiment is operated in the Sabbath mode, the heating device operates the fan module 25, and thereby circulation of hot air is performed over the entire cooking chamber 12. As a result of operation of the fan module 25, uniform heating over the entire cooking chamber 12 can be performed more effectively.

However, when the fan module 25 operates, noise inevitably occurs accordingly, and if great noise occurs when the fan module 25 operates, it may be easily recognized that the cooking appliance is in operation. In that case, a meaning that the cooking appliance is operated in the Sabbath mode may inevitably be diminished.

In consideration of such a point, in the present embodiment, when the cooking appliance is operated in the Sabbath mode, the fan module 25 operates at the third output. By way of example, when the cooking appliance is operated in the Sabbath mode, the fan module 25 may rotate the fan 26 at a speed at least 50% slower than during the first-output operation. For example, if during the first-output operation of the fan module 25 the fan 26 rotates at a speed of 1600 rpm, when the cooking appliance is operated in the Sabbath mode, the fan module 25 may operate to rotate the fan 26 at a speed of 700 rpm.

In addition, the fan module 25 of the present embodiment may be provided to be able to rotate the fan 26 in forward rotation and reverse rotation. That is, by the fan module 25 of the present embodiment, the fan 26 may be forward-rotated, and may be reverse-rotated.

By way of example, a BLDC motor may be applied as the fan motor 27, and such a fan motor 27 may be provided to be capable of adjusting not only a rotation speed but also a rotation direction. The fan module 25 of the present embodiment including such a fan motor 27 may forward-rotate the fan 26 or reverse-rotate the fan 26 as needed.

As described above, when the cooking appliance is operated in the Sabbath mode, the fan 26 rotates at a speed at least 50% slower than the first speed, and accordingly, a flow rate of hot air discharged from the convection device 20 may inevitably be reduced. The more the flow rate of hot air discharged from the convection device 20 is reduced, the more it becomes difficult for the hot air to be uniformly spread in the cooking chamber 12, and if so, it becomes difficult to achieve uniform heating of the entire cooking chamber 12.

In consideration of such a point, in the present embodiment, the fan motor 27 is provided that can operate such that both the forward rotation and the reverse rotation of the fan 26 are possible. Also, such a fan motor 27 may operate such that the forward rotation and the reverse rotation of the fan 26 are alternated.

According to the present embodiment as described above, when the fan module 25 rotates the fan 26 in a forward direction, the fan 26 can blow hot air in a direction between a forward direction and a centrifugal direction. Also, when the fan module 25 rotates the fan 26 in a reverse direction, the fan 26 can blow hot air in a direction between a reverse direction and a centrifugal direction.

For example, when the fan 26 rotates in the forward direction, a mainstream of hot air discharged from the convection device 20 may flow toward a region biased to an upper left in the cooking chamber 12 and a region biased to a lower right in the cooking chamber 12. Also, when the fan 26 rotates in the reverse direction, a mainstream of hot air discharged from the convection device 20 may flow toward a region biased to an upper right in the cooking chamber 12 and a region biased to a lower left in the cooking chamber 12.

That is, as a result of operation of the fan motor 27 such that the forward rotation and the reverse rotation of the fan 26 are alternated as illustrated in the present embodiment, hot air can be uniformly spread in the cooking chamber 12, and accordingly, uniform heating of the entire cooking chamber 12 can be achieved more effectively.

An operation according to the Sabbath mode of the cooking appliance proceeding as described above may continue until an operation of an input unit for deactivating the Sabbath mode is performed or cooking is completed. Until the Sabbath mode is deactivated, even if cooking is completed, a state in which changes such as lighting 17 do not occur and timer and alarm functions are disabled may be maintained, and a state in which all input units for manually operating the cooking appliance are disabled may also be maintained.

The cooking appliance of the present embodiment as described above can effectively provide a function for compliance with some religious regulations by providing a cooking function according to the Sabbath mode that performs cooking while maintaining a state in which most functions are disabled except for some functions essential for cooking.

Also, the cooking appliance of the present embodiment can allow uniform heating of the entire cooking chamber 12 to be effectively achieved while significantly reducing noise due to driving of the fan 26 by controlling the operation of the heating device such that, when the Sabbath mode is activated, a low-speed rotation and a bidirectional rotation of the fan 26 are performed.

Such a cooking appliance of the present embodiment can effectively implement the Sabbath mode only by operation of the convection device 20 without operation of a bake heater or a bake burner.

The embodiments are described above with reference to a number of illustrative embodiments thereof. However, the embodiments are provided as examples, and numerous other modifications and equivalent embodiments can be drawn by one having ordinary skill in the art from the embodiments. Thus, the technical scope of protection of the subject matter of the disclosure is to be defined according to the following claims.

### [Description of Reference Numerals]

0 : main body
11 : cavity
12 : cooking chamber
20 : convection device
21 : fan cover
21a : suction port
21b : discharge port
22 : front discharge port
23 : convection heater
25 : fan module
30 : door
40 : cooktop unit
50 : control panel
90 : controller

## Claims

1. A cooking appliance comprising:
a main body having a cooking chamber; and
a heating device including a fan module operable to supply hot air into the cooking chamber, wherein:
the fan module is operable in one of a normal operation mode and a Sabbath mode,
in the normal operation mode, the fan module operates at either a first output or a second output lower than the first output, and
in the Sabbath mode, the fan module operates at a third output lower than the second output.

2. The cooking appliance of claim 1, wherein:
the fan module comprises a fan rotatable to supply hot air into the cooking chamber, and
when operating at the third output, the fan module rotates the fan at a speed lower than when operating at the first output or the second output.

3. The cooking appliance of claim 1, wherein:
the fan module comprises a fan rotatable to supply hot air into the cooking chamber and a fan motor for rotating the fan,
in the normal operation mode, the fan motor rotates the fan at either a first speed or a second speed lower than the first speed, and
in the Sabbath mode, the fan motor rotates the fan at a third speed lower than the second speed.

4. The cooking appliance of claim 3, wherein the fan motor comprises a BLDC motor.

5. The cooking appliance of claim 1, wherein:
the fan module comprises a fan rotatable to supply hot air into the cooking chamber and a fan motor for rotating the fan,
the fan motor comprises a BLDC motor configured to rotate the fan at three or more different speeds, and
in the Sabbath mode, the fan motor rotates the fan at a speed equal to or lower than a third lowest speed among the three or more speeds.

6. The cooking appliance of one of claims 1 to 5, wherein:
the heating device comprises a convection heater disposed adjacent to the fan module at a rear side of the cooking chamber and a bake heater disposed below the cooking chamber, and
in the Sabbath mode, at least one of the convection heater and the fan module operates, while the bake heater does not operate.

7. The cooking appliance of one of claims 1 to 5, wherein:
the fan module comprises a fan rotatable to supply hot air into the cooking chamber and a fan motor configured to rotate the fan in a forward direction and a reverse direction, and
in the Sabbath mode, the fan motor alternately drives the forward rotation and the reverse rotation of the fan.

8. A control method for a cooking appliance comprising a main body forming a cooking chamber and a heating device including a fan module operable to supply hot air into the cooking chamber, the method comprising:
an input determining step; and
an operation control step of controlling an operation of the fan module according to a type of the input operation mode, wherein:
when the operation mode determined in the input determining step is the normal operation mode, the operation control step operates the fan module at either a first output or a second output lower than the first output, and
when the operation mode determined in the input determining step is the Sabbath mode, the operation control step operates the fan module at a third output lower than the second output.

9. The method of claim 8, wherein, when the operation mode determined in the input determining step is the Sabbath mode, an operation of an input unit for generating a signal to manually operate at least one of lighting and the heating device implemented in the cooking appliance is disabled.

10. The method of claim 8 or 9, wherein, when the operation mode determined in the input determining step is the Sabbath mode, the operation control step disables a control for changing an operation of the cooking appliance even if the door is opened or closed or the input unit is operated.

11. The method of one of claims 8 to 10, wherein the fan module comprises a fan rotatable to supply hot air into the cooking chamber and a fan motor for rotating the fan, wherein:
when the operation mode determined in the input determining step is the normal operation mode, the operation control step drives the fan motor to rotate the fan at either a first speed or a second speed lower than the first speed, and
when the operation mode determined in the input determining step is the Sabbath mode, the operation control step drives the fan motor to rotate the fan at a third speed lower than the second speed.

12. The method of one of claims 8 to 11, wherein:
the heating device comprises a convection heater disposed adjacent to the fan module at a rear side of the cooking chamber, and a bake heater disposed below the cooking chamber, and
when the operation mode determined in the input determining step is the Sabbath mode, the operation control step operates at least one of the convection heater and the fan module without operating the bake heater.

13. The method of one of claims 8 to 12, wherein:
the fan module comprises a fan rotatable to supply hot air into the cooking chamber and a fan motor configured to rotate the fan in a forward direction and a reverse direction, and
when the operation mode determined in the input determining step is the Sabbath mode, the operation control step switches the fan between forward and reverse rotation.
